# EUROPÄISCHE PATENTSCHRIFT

(11) **EP 1 065 396 B1**
(45) Veröffentlichungstag und Bekanntmachung des Hinweises auf die Patenterteilung: **08.09.2004**
(21) Anmeldenummer: 00113758.7
(22) Anmeldetag: 29.06.2000
(51) Int. Cl.: F16C 33/54

(54) **Blechkäfig für Wälzlager**
Sheet metal cage for roller bearing
Cage en tôle pour palier à roulement

(30) Priorität: 02.07.1999 DE 19930658
(43) Veröffentlichungstag der Anmeldung: 03.01.2001
(73) Patentinhaber: FAG Kugelfischer AG, 97419 Schweinfurt (DE)
(72) Erfinder: Van der Knokke, Henri, 97464 Niederwerrn (DE)

(56) Entgegenhaltungen:
- DE-A- 3 322 860
- DE-A- 4 412 850
- DE-U- 7 035 928
- DE-U- 8 222 139
- DE-U- 8 908 581
- US-A- 4 239 304
- US-A- 4 961 651

## Beschreibung

### Gebiet der Erfindung

Die Erfindung bezieht sich auf einen Blechkäfig für ein Wälzlager nach dem Oberbegriff des Anspruchs 1.

### Hintergrund der Erfindung

Der Blechkäfig hat wie alle Käfige in Wälzlagern die Aufgabe, die Wälzkörper zu führen und die Wälzkörper auf Abstand zueinander zu halten. Um dabei eine hohe Tragzahl des Wälzlagers zu erreichen, müssen möglichst viele Wälzkörper im Wälzlager untergebracht werden. Ein großer Teilkreis des Käfigs ermöglicht, daß der Abstand der Wälzkörper untereinander minimiert werden kann, da der Käfigsteg außerhalb der Wälzkörpermitte liegt. Um bei dieser Konstruktion, z. B.: beim Zylinderrollenlager, noch die Wälzkörper bei der Montage halten zu können, werden zusätzlich Kunststoffhalteklammern verwendet. Die Kunststoffhalteklammern haben nur die Aufgabe, die Wälzkörper bei der Montage des Wälzlagers zu halten. Im Betrieb des Wälzlagers werden die Wälzkörper nur vom Blechkäfig geführt.

In der DE 7034682 U wird ein solcher Käfig gezeigt. Der Nachteil dieser Lösung besteht darin, daß hier zusätzliche Halteklammern verwendet werden, die einzeln nach dem Fertigen des Käfigs gefügt werden müssen. Ein weiterer Nachteil dieser Anordnung besteht darin, daß diese Schnappverbindung der Halteklammern keine sichere Verbindung bei allen Betriebszuständen des Wälzlagers darstellt. Diese Halteklammern können im Betrieb aus dem Käfig fallen.

In der gattungsgemäßen DE 1805265 C3 wird ein Käfig gezeigt, der durch Ausstanzen aus einem Blechband verbunden mit Rundbiegen und Zusammenschweißen der Enden gefertigt wird. Bei dieser Käfigkonstruktion ist es nicht möglich, den Teilkreis außerhalb der Wälzkörpermitte zu legen.

### Aufgabe der Erfindung

Es besteht also die Aufgabe bei der Auslegung eines Blechkäfigs, die maximale Lagertragzahl mit minimierten Herstellkosten zu koppeln.

### Beschreibung der Erfindung

Erfindungsgemäß wird diese Aufgabe durch die Merkmale des kennzeichnenden Teiles des Anspruchs 1 gelöst.

Der wesentliche Vorteil der Erfindung besteht darin, daß der Vorgang "Schweißen" nach dem Rundbiegen des Blechkäfigs bzw. Blechkäfigsegmente an der Stoßstelle entfällt und durch ein Verbinden der Blechkäfigenden mit Kunststoff ersetzt wird. Bei diesem Vorgang des Kunststoffumspritzens werden mit einem Werkzeug gleichzeitig noch alle Halteklammern an der Verbindungsstelle und an den Stegen angespritzt. Damit entfällt das Fügen der einzelnen Kunststoffhalteklammern nach dem Fertigen des Blechkäfigs.

Ein weiterer Vorteil der erfindungsgemäßen Gestaltung des Käfigs besteht in der formschlüssig ineinandergreifenden Auslegung (bevorzugte Auslegung schwalbenschwanzförmigen) der Käfigenden an der Stoßstelle. Durch die ineinandergreifende Form werden die im Betrieb des Blechkäfigs auftretenden Zug- und Druckspannungen formschlüssig aufgenommen. Dadurch wird das Verbindungselement nicht zusätzlich belastet.

### Kurze Beschreibung der Zeichnung

Figur 1 zeigt den erfindungsgemäßen Blechkäfig in der Draufsicht an der Verschlussstelle nach dem Rundbiegen.
Figur 2 zeigt den erfindungsgemäßen Blechkäfig in der Seitenansicht an der Verschlussstelle.
Figur 3 zeigt die zwei Positionen der Rollen im Lager.

### Ausführliche Beschreibung der Zeichnung

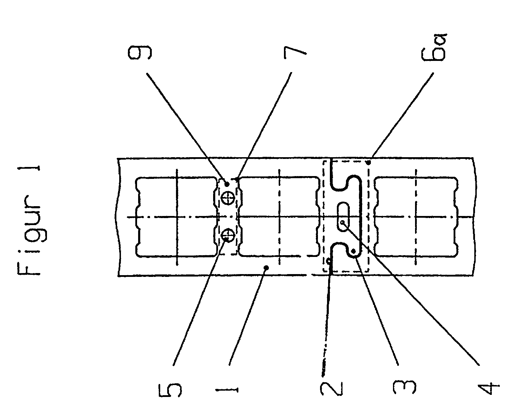

Figur 1 zeigt den rundgebogenen Blechkäfig **1** vor dem Anspritzen des Verbindungselementes **6a** mit Halteklammern **6b**. bzw. Halteklammern **7** im Stegbereich **9**. Die ineinandergreifende Verbindung der Käfigenden **3** ist dargestellt. Die Grundfläche der Verbindungselemente **6a** bzw. Grundfläche der Halteklammer **7** ist gestrichelt dargestellt. Durch die Aussparungen **4** und **5** werden in diesem Beispiel die angespritzen Halteklammern formschlüssig gehalten.

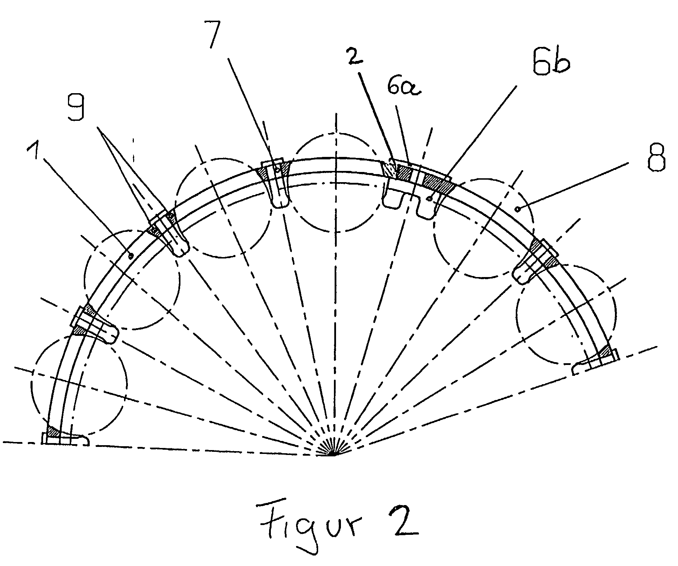

Figur 2 zeigt einen mit Halteklammern **6b** an der Stoßstelle **2** und die Halteklammern **7** im Stegbereich **9** des umspritzten Käfigs **1**. In dieser Darstellung ragen die Käfigenden an der Stoßstelle **2** in das H-förmige Verbindungselement **6a** mit Halteklammer **6b**. Die Halteklammern **6b, 7** sind so dimensioniert, daß sie nur im Montagefall des Wälzlagers die Rollen zu einer Baueinheit zusammenhalten.

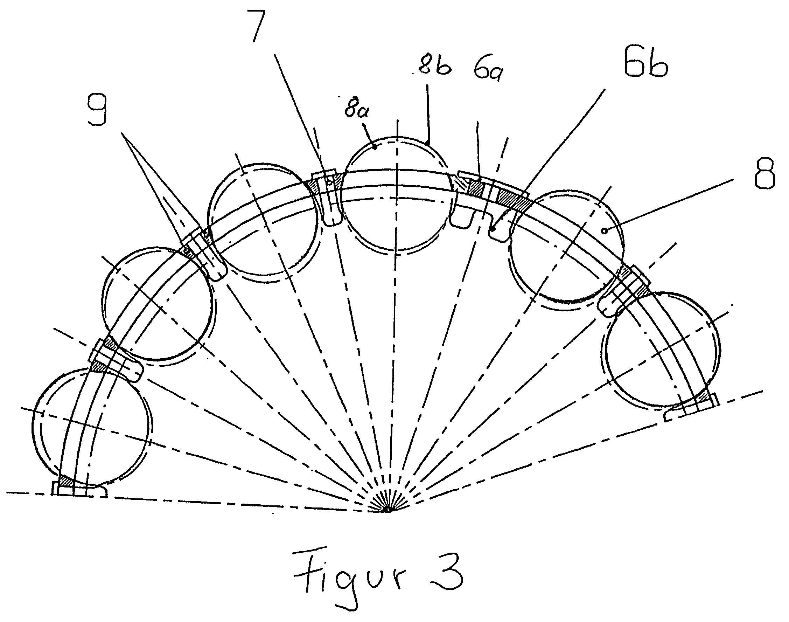

In Figur 3 werden die beiden Positionen der Rolle **8** gezeigt. Im Fall **8a** der Montage hängt die Rolle durch, da der Innenring fehlt und die Rolle wird von den Halteklammern **6b, 7** am Herausfallen aus dem Wälzlager gehindert. Dies ist zum Beispiel dann der Fall, wenn beim Zylinderrollenlager der Außenring mit Käfig und Rollen bestückt ist, aber der Innenring noch nicht in das Lager gefügt wurde oder wenn zur Montage des Zylinderrollenlagers auf eine Welle der Innenring aus dem Lager gezogen wird. Ohne diese Haltenasen würden bei diesen Situationen die Rollen **8** aus dem Wälzlager fallen. Im Betrieb **8b** des Wälzlagers wird die Rolle von den Käfigstegen **9** geführt und die Halteklammern sind ohne Belastung.

### Bezugszeichenliste

- 1: Blechkäfig
- 2: Stoßstelle der Käfigenden
- 3: Schwalbenschwanzförmige Verbindung an den Käfigenden
- 4: Aussparung im Bereich des Verbindungselementes
- 5: Aussparung im Bereich des Käfigsteges
- 6a: Verbindungselement an der Stoßstelle
- 6b: Halteklammer am Verbindungselement
- 7: Halteklammer im Stegbereich
- 8: Wälzkörper
- 8a: Wälzkörper bei der Montage
- 8b: Wälzkörper während des Betriebes
- 9: Stege des Käfigs

## Patentansprüche

1. Blechkäfig für Wälzlager, insbesondere Zylinderrollenlager, bestehend aus mindestens einem leiterförmigen, rundgebogenen Segment eines Fensterkäfigs, der an den Stoßstellen **(2)** der Segmente verbunden ist, **dadurch gekennzeichnet, daß** an den Stoßstellen **(2)** im jeweiligen Stegbereich **(9)** die Käfigenden formschlüssig ineinander greifen und diese Stegbereiche **(9)** mit einem Verbindungselement **(6a)** umspritzt und hierdurch dauerhaft verbunden sind.

2. Blechkäfig nach Anspruch 1, **dadurch gekennzeichnet, daß** an den jeweiligen Verbindungselementen **(6a)** Halteklammern **(6b)** so angespritzt sind, dass diese zusammen mit den Halteklammern **(7)**, die an den übrigen Stegen **(9)** des Blechkäfigs angespritzt sind, die Rollen **(8)** während des Montagevorganges im Blechkäfig halten und im Betrieb des Wälzlagers unbelastet bleiben.

## Claims

1. A sheet-metal cage for rolling bearings, especially cylindrical rolling bearings, comprising at least one ladder-shaped bent segment of a window cage, connected at the joints (2) between the segments, **characterised In that** the cage ends positively interlock at each respective web region (9) at the joints (2) and the web regions (9) are permanently connected by embedding in an injection-moulded connecting element (6a).

2. A sheet-metal cage according to claim 1, **characterised in that** retaining clamps (6b) are integrally moulded on the respective connecting elements (6a) so that the clamps (6b) together with the clamps (7) injection-moulded on the remaining webs (9) of the cage hold the rollers (8) in the cage during the assembly process and are not under load when the rolling bearing is in operation.

## Revendications

1. Cage en tôle pour palier à roulement, en particulier pour roulement à rouleaux cylindriques, consistant en au moins un segment de cage à fenêtre arrondi et en forme d'échelle, la cage à fenêtre étant reliée aux points d'impact (2) des segments, **caractérisée en ce que**, sur les points d'impact (2) dans chaque région de barreau (9), les extrémités de la cage viennent en prise les unes dans les autres par conjugaison de forme et ces régions de barreau (9) sont surmoulées avec un élément de liaison (6a) et sont ainsi reliées de manière durable.

2. Cage en tôle selon la revendication 1, **caractérisée en ce que**, sur les éléments de liaison (6a) respectifs, des étriers de retenue (6b) sont injectés, de telle sorte que ceux-ci, conjointement avec les étriers de retenue (7) qui sont injectés sur les barreaux (9) restants de la cage en tôle, maintiennent les rouleaux (8) dans la cage en tôle lors du processus de montage et restent non chargés lors du fonctionnement du palier à roulement.
